# EUROPEAN PATENT APPLICATION

(11) **EP 4 280 296 A1**
(43) Date of publication of application: **22.11.2023**
(21) Application number: 21969758.8
(22) Date of filing: 31.12.2021
(51) Int. Cl.: H01M 4/13, H01M 4/139, H01M 10/0525

(54) **NEGATIVE ELECTRODE PLATE, PREPARATION METHOD THEREFOR, SECONDARY BATTERY COMPRISING NEGATIVE ELECTRODE PLATE, AND ELECTRIC DEVICE**

(71) Applicant: Contemporary Amperex Technology Co., Limited, Ningde, Fujian 352100 (CN)
(72) Inventor: ZHANG, Tongxian, Ningde, Fujian 352100 (CN); ZHANG, Ming, Ningde, Fujian 352100 (CN)
(74) Representative: Herrmann, Uwe
(86) International application number: PCT/CN2021/143822
(87) International publication number: WO 2023/123411

(57) **Abstract**

The present application provides a negative electrode plate and a method for preparing the negative electrode plate. The negative electrode plate of the present application comprises: a negative current collector and a negative film layer located on a surface of the negative current collector, the negative film layer has a length direction consistent with a length direction of the negative current collector and a width direction consistent with a width direction of the negative current collector, a cross section of the negative film layer perpendicular to the length direction comprises a uniform thickness region located at a middle portion in the width direction and edge regions located at two ends in the width direction, either of the edge regions has a thickness continuously decreasing in a direction from the uniform thickness region to the edge region, and the width a of either of the two edge regions and the average thickness d of the uniform thickness region satisfy the relational expression: a/d ≤ 1.5, and d ≤ 300 µm. Thus, the negative electrode plate free of crimping and cracking and having good mechanical stability can be obtained, and when the negative electrode plate is used for a secondary battery, the phenomenon of local lack of active material and edge lithium precipitation will not occur, thereby facilitating functioning of the high capacity of a negative electrode active material to the maximum extent.

## Description

### Technical Field

The present application relates to the field of batteries, and more particularly, to a negative electrode plate and a preparation method therefor, a secondary battery including the negative electrode plate, and a power consuming device.

### Background Art

In recent years, secondary batteries are increasingly used in energy storage power systems such as hydraulic power, thermal power, wind power and solar power plants, as well as many fields such as electric tools, electric bicycles, electric motorcycles, electric vehicles, military equipment, and aerospace. Since the secondary batteries have been greatly developed, higher requirements are also made on their safety performance.

Therefore, how to make a battery have a good safety performance is still an urgent problem to be solved.

### Summary of the Invention

In view of the above-mentioned technical problem, and the present application aims to provide a negative electrode plate, a method for preparing the negative electrode plate, a secondary battery containing the negative electrode plate, and a power consuming device, in order to improve the safety performance of a battery.

To achieve the above object, a first aspect of the present application provides a negative electrode plate, including: a negative current collector and a negative film layer located on a surface of the negative current collector, wherein the negative film layer has a length direction consistent with a length direction of the negative current collector and a width direction consistent with a width direction of the negative current collector, a cross section of the negative film layer perpendicular to the length direction comprises a uniform thickness region located at a middle portion in the width direction and edge regions located at two ends in the width direction, either of the edge regions at the two ends has a thickness continuously decreasing in a direction from the uniform thickness region to the edge region, and the width a of either of the two edge regions and the average thickness d of the uniform thickness region satisfy the relational expression: aid ≤ 1.5, and d ≤ 300 µm.

Thus, in the present application, by controlling the thickness profile of the negative film layer, especially the thickness profile of the edge regions, it is possible to obtain a negative electrode plate free of crimping and cracking and having good mechanical stability, and by controlling the width of the edge regions of a negative film layer in a certain range, it is possible to reduce the range of a region with an non-uniform thickness, to reduce the possibility of local lack of active material, and to avoid local (edge) lithium precipitation due to the lack of active material, thereby improving the safety of the secondary battery.

In any embodiment, aid ≤ 1, and optionally aid ≤ 0.75, and further optionally aid ≤ 0.5. Thus, it is possible to further decrease the size of the edge regions of the negative film and reduce the range of a region with an non-uniform thickness, thereby reducing the possibility of local lack of active material, and avoiding local (edge) lithium precipitation, and further improving the safety of the secondary battery.

In any embodiment, the negative film layer includes a negative active material, a conductive agent, a first binder, and a second binder; wherein optionally, the first binder comprises at least one of (methyl) acrylic acid, polyacrylamide, cellulose ether or salt thereof, starch ether or salt thereof; and optionally, the second binder comprises at least one of acrylate-ethylene, styrene butadiene rubber, nitrile rubber, acrylate, and polyurethane. Thus, it is possible to easily obtain a slurry for the negative film layer for properly controlling the thickness profile of the negative film layer as described above by means of simple extrusion coating during preparation, and to enble the slurry to remain stable for a long time.

In any embodiment, the first binder comprises sodium carboxymethyl cellulose (CMC-Na).

In any embodiment, the sodium carboxymethyl cellulose has a weight-average molecular weight smaller than or equal to 400000; and optionally in the range of 200000-300000. Thus, it is possible to obtain a slurry having a high solid component concentration that can remain stable for a long time during the preparation of the negative film layer, and to improve the processability of the negative electrode plate prepared.

In any embodiment, the sodium carboxymethyl cellulose has a degree of substitution in the range of 0.65-0.8.

In any embodiment, the first binder comprises sodium carboxymethyl starch (CMS-Na).

In any embodiment, the sodium carboxymethyl starch has a polydispersity index (PDI) in the range of 2.0-5.5, and optionally 2.5-4. Thus, it is possible to obtain a slurry having a high solid component concentration that can remain stable for a long time during the preparation of the negative film layer, and to improve the processability of the negative electrode plate prepared.

In any embodiment, the sodium carboxymethyl starch has a weight-average molecular weight of 400000 or more, optionally in the range of 400000-600000. Thus, it is possible to obtain a slurry having a high solid component concentration that can remain stable for a long time during the preparation of the negative film layer, and to improve the processability of the negative electrode plate prepared.

In any embodiment, the second binder is styrene butadiene rubber having a particle size Dv50 in the range of 80 nm ≤ Dv50 ≤ 200 nm. By having such small-sized rubber particles, it is possible to give a full play of a bonding effect and to improve the cohesion of the slurry, and further, due to the small size of the rubber particles, it is also possible to increase the possibility of the rubber particles covering a graphite end face, and it is thus possible to increase the direct current resistance of the electrode plate.

In any embodiment, the first binder and the second binder have a content ratio ranging from 2 : 1 to 1 : 2, and optionally ranging from 1.5 : 1 to 1 : 1.5. Thus, it is possible to obtain a slurry having a high solid component concentration that can remain stable for a long time during the preparation of the negative film layer, and to improve the processability of the negative electrode plate prepared.

The second aspect of the present application further provides a method for preparing the negative electrode plate of the first aspect described above, the method comprising the steps: coating the negative current collector with a negative slurry, and obtaining the negative electrode plate by means of drying and cold pressing of the negative slurry.

In any embodiment, the negative slurry has a solid component content of greater than or equal to 60% by mass, and optionally in the range of 60%-75% by mass. Thus, it is conductive to obtain the specific negative film layer structure of the present application during the coating of the negative slurry, thereby efficiently prolonging the cycle life of the secondary battery and improving the safety performance thereof.

In any embodiment, the negative slurry comprises a negative active material, a conductive agent, a first binder and a second binder, and the preparation method described above comprises the steps: mixing the negative active material, the conductive agent, the first binder, the second binder and deionized water to obtain the foregoing slurry; and coating the negative slurry on the surface of the current collector by extrusion, and obtaining the negative electrode plate by means of drying and cold pressing of the negative slurry.

In any embodiment, the first binder is selected from at least one of (methyl) acrylic acid, polyacrylamide, cellulose ether or salt thereof, starch ether or salt thereof.

In any embodiment, the second binder is selected from at least one of acrylate-ethylene, styrene butadiene rubber, nitrile rubber, acrylate, and polyurethane.

In any embodiment, the first binder comprises sodium carboxymethyl cellulose.

In any embodiment, the sodium carboxymethyl cellulose has a weight-average molecular weight of 400000 or less, and optionally in the range of 200000-300000.

In any embodiment, the sodium carboxymethyl cellulose has a degree of substitution in the range of 0.65-0.8.

In any embodiment, the first binder comprises sodium carboxymethyl starch.

In any embodiment, the sodium carboxymethyl starch has a polydispersity index (PDI) in the range of 2.0-5.5, and optionally 2.5-4.

In any embodiment, the sodium carboxymethyl starch has a weight-average molecular weight of 400000 or more, optionally in the range of 400,000 - 600,000.

In any embodiment, the second binder is styrene butadiene rubber having a volume average particle size Dv50 satisfying: 80 nm ≤ Dv50 ≤ 200 nm.

In any embodiment, the first binder and the second binder have a mass content ratio ranging from 2 : 1 to 1 : 2, and optionally ranging from 1.5 : 1 to 1 : 1.5.

Thus, a negative slurry with an appropriate solid component content can be prepared, the stabilization time of the slurry can be increased, which contributes to obtain a negative electrode plate in which the negative film layer has a thickness profile as specified in the present application.

A third aspect of the present application provides a secondary battery comprising the negative electrode plate in the first aspect of the present application or the negative electrode plate prepared by means of the method in the second aspect of the present application.

A fourth aspect of the present application provides a power consuming device comprising the secondary battery in the third aspect of the present application.

### Brief Description of the Drawings

Fig. 1 is a schematic cross-sectional view of a negative electrode plate according to an embodiment of the present application.
Fig. 2 is a schematic cross-sectional view of a negative film layer according to an embodiment of the present application.
Fig. 3(A), Fig. 3(B), Fig. 3(C) and Fig. 3(D) respectively represent schematic cross-sectional views of an edge region of different shapes of the negative film layer of the present application.
Fig. 4 shows a CCD photograph of the negative electrode plate according to an embodiment of the present application.
Fig. 5 shows a CCD photograph of a negative electrode plate in the prior art.
Fig. 6 is a flowchart of a method for preparing a negative electrode plate according to an embodiment of the present application.
Fig. 7 is a schematic diagram of a secondary battery according to an embodiment of the present application.
Fig. 8 is an exploded view of the secondary battery according to an embodiment of the present application shown in Fig. 7.
Fig. 9 is a schematic diagram of a power consuming device according to an embodiment of the present application.

### List of reference signs:

1: Negative electrode plate; 11: Negative film layer; 12: Negative current collector; 111: Uniform thickness region; 112: Edge region; 5: Secondary battery; 51: Housing; 52: Electrode assembly; 53: Top cover assembly.

### Detailed Description of Embodiments

Embodiments of the present application that specifically disclose a negative electrode plate, a preparation method therefor, a secondary battery, and a power consuming device will be described below in detail with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

A secondary battery is generally composed of a positive electrode, a negative electrode, an electrolyte, etc. The negative electrode is prepared by mixing a negative active material, a binder, an additive, etc. to prepare a slurry, uniformly coating the slurry on one side or two sides of a current collector, and then carrying out drying, rolling, etc.

However, during the slurry coating, a thick active material layer will accumulate at an edge due to the surface tension, rheological properties, etc. of the slurry, that is to say, a so-called "fat-edge phenomenon" occurs. Accordingly, a stress difference is caused between the thicker edge region and a middle region during the drying, resulting in the problem of edge cracks of an electrode plate. However, existing methods for alleviating the "fat-edge phenomenon" in the electrode plate are generally inaccurate in controlling the thickness of the electrode plate, which may easily lead to the problems of the local lack of active material and local lithium precipitation at the edge, etc. during the operation of a prepared battery, thus affecting the safety of the battery.

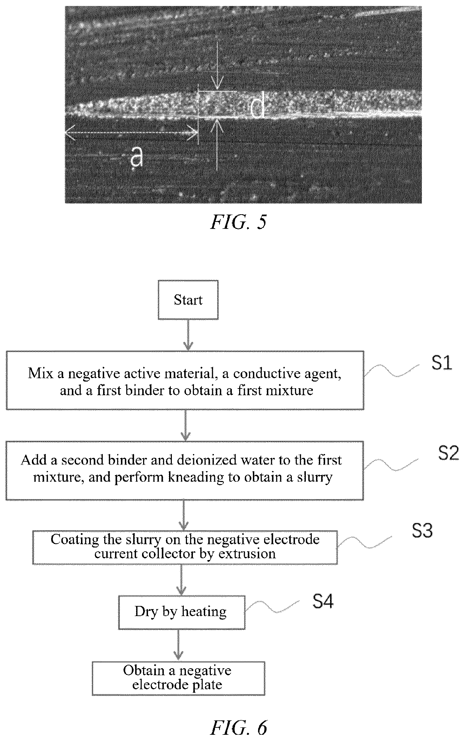

In the prior art, in order to solve such a problem, an angle guide washer or the like is used at an extrusion coating port in an extrusion coating device to control the flow rate of the extruded slurry at the edge, thereby thinning the edge of a coating and preventing the edge from being excessively thick. However, due to the limitations of the viscosity, fluidity, etc. of the slurry for the negative electrode coating used, the control of the thickness by this "thinning" technique is not good, resulting in a wide range of a thickness-reduced region of the edge of the electrode plate (as shown in Fig. 5), which is likely to lead in the local lack of active material at the edge portion of the negative electrode plate during the operation of the secondary battery and thus lithium precipitation at the edge, affecting the safety of the secondary battery in use.

The inventors of the present application have found in special studies that by using a specific binder during the preparation of a negative film layer, a slurry having a specific property can be obtained, such that the problem of the "fat-edge phenomenon" existing in a current extrusion coating method can be solved with simple extrusion coating (without an additional angle guide washer for thinning, etc.), and a negative electrode film having a very small edge region with a reduced thickness can be obtained, and thus the problems of the local lack of active material and edge lithium precipitation due to an excessively large edge region do not occur. The negative electrode plate obtained by the present invention is free of crimping and cracking, no edge lithium precipitation occurs, and a secondary battery having a low internal resistance, long cycle life and excellent safety performance can be provided by using such a negative electrode plate.

### [Negative electrode plate]

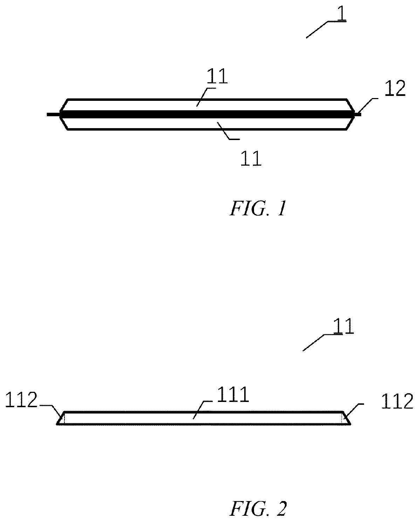

Referring to Fig. 1, an embodiment of the present application provides a negative electrode plate 1, including: a negative current collector 12 and a negative film layer 11 located on a surface of the negative current collector 12. The negative film layer 11 may be formed on one side or two sides of the negative current collector 12. The negative film layer 11 has a length direction consistent with a length direction of the negative current collector 12 and a width direction consistent with a width direction of the negative current collector 12 (Fig. 1 is a schematic cross-sectional view perpendicular to the length direction of the negative current collector 12). Viewed from a cross section perpendicular to the length direction, the negative film layer 11 includes a uniform thickness region 111 located at a middle portion in the width direction and edge regions 112 located at two ends in the width direction, either of the edge regions having a thickness continuously decreasing in a direction from the uniform thickness region to the edge region. The width a of either of the two edge regions and the average thickness d of the uniform thickness region satisfy the relational expression: aid ≤ 1.5, and d ≤ 300 µm.

In this way, not only is the problem of the existing "fat-edge phenomenon" of a negative electrode plate manufactured by a conventional extrusion coating process eliminated, but also the range of the edge region itself is controlled to be small, such that there is no problem that a negative electrode plate manufactured by the conventional extrusion coating process for "thinning" with the additional angle guide washer similarly locally lacks an active material. Such a negative electrode plate 1 in the embodiment is free of crimping and cracking, no edge lithium precipitation occurs, and a secondary battery having a prolonged cycle life and excellent safety performance can be provided by using such a negative electrode plate.

As shown in Fig. 2, the uniform thickness region 111 refers to a region where the height between an upper surface and a lower surface of the negative film layer is substantially constant. Depending on the preparation process, the thickness of the uniform thickness region 111 may have a certain range of variation, that is, the upper surface of the uniform thickness region 111 may have a certain roughness. In some embodiments, the thickness of the uniform thickness region 111 has a coefficient of variation CV_{d} ≤ 5%. The edge regions 112 are located at two ends of the negative film layer, has a thicknesses that continuously decrease to 0 in the direction from the uniform thickness region to the ends.

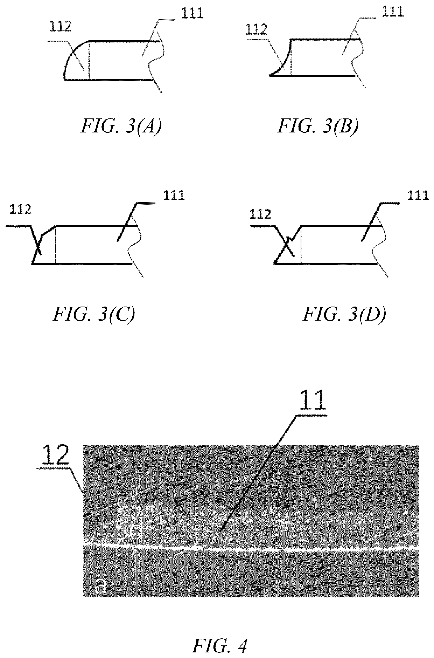

As a typical shape of the cross section of the negative film layer 11, a trapezoidal shape (as shown in Fig. 2) having a side close to the negative current collector as a lower side can be exemplified. The trapezoid can be an isosceles trapezoid or a non-isosceles trapezoid. In addition, as long as the shape of the cross section of either of the two edge regions 112 of the negative film layer 11 has a thickness that continuously decreases in the direction from the uniform thickness region to the edge region, and the width a of the edge region 112 and the average thickness d of the uniform thickness region 111 satisfy the relational expression: aid ≤ 1.5. In addition to the triangular shape shown in Fig. 2, the shape of the cross section of the edge region 112 may also be a shape in which the sides shown in Figs. 3(A) and 3(B) are curved (i.e., the side surfaces are curved surfaces), or a shape in which the sides are formed by two or more oblique lines having different slopes (the side surfaces are composed of two or more bevels having different slopes) (as shown in Fig. 3(C)). In fact, a case may also be possible in which an occasional thickness increase occurs in the direction from the uniform thickness region to the edge region due to an operation error, etc. (as shown in Fig. 3(D)), as long as the overall tendency of the thickness continuously decreasing in the direction from the uniform thickness region to the edge region is not affected.

In this embodiment, the distinction and measurement of the uniform thickness region 111 and the edge regions 112 can be implemented by observing a cross section of the negative electrode plate perpendicular to its length direction with an optical microscope (such as CCD), and an electron microscope (such as SEM, STEM, etc.). A CCD photograph of a portion of the negative electrode film of an example of this embodiment is shown in Fig. 4. In the CCD photograph, the middle portion with a substantially uniform thickness is taken as the thickness uniform region, and a region with a thickness continuously decreasing to 0 in the direction from the thickness uniform region to an end is taken as the edge region. Taking the length of the projection of the edge region on a lower bottom edge of the electrode plate as the width a of the edge region, in this embodiment, a and the average thickness d of the uniform thickness region satisfy the relational expression: aid ≤ 1.5. Thus, the range of the thickness-reduced edge region of the negative electrode film is small, that is, the region in which the thickness is not uniform is small, and the end of the edge region with a very small thickness is not distant from the uniform thickness region. Therefore, during the operation of the secondary battery, electrons or lithium ions are easier to migrate toward the uniform thickness region, reducing the possibility of local lack of active material, reducing local lithium precipitation, and improving the safety of the secondary battery. Furthermore, in this embodiment, the thickness of the uniform thickness region is controlled to be d ≤ 300 µm, and optionally, 50 µm ≤ d ≤ 300 µm, from the viewpoint of the economical efficiency and cycle life of the battery.

In some embodiments, aid ≤ 1, optionally aid ≤ 0.75, and further optionally aid ≤ 0.5. Thus, it is possible to further decrease the size of the edge regions of the negative film layer and reduce the range of a region with an non-uniform thickness, thereby reducing the possibility of local lack of active material, and avoiding local (edge) lithium precipitation, and further improving the safety of the secondary battery. Ideally, a may be 0 such that the edge regions are directly omitted, the possibility of local lack of active material will not occur at all, and the safety of the secondary battery is further improved.

In some embodiments, the negative film layer includes a negative active material, a conductive agent, a first binder, and a second binder.

The first binder includes at least one of (methyl) acrylic acid, polyacrylamide, cellulose ether or salt thereof, starch ether or salt thereof. It is preferable if the first binder is sodium carboxymethyl cellulose (CMC-Na) or sodium carboxymethyl starch (CMS-Na) from the viewpoint of improving the adhesion strength of the negative film layer and decreasing coating cracks.

In some embodiments, in the case of sodium carboxymethyl cellulose selected as the first binder, the weight-average molecular weight (Mw) thereof is controlled to be 400000 or less; For example, the weight-average molecular weight may be 200000-400000, or 200000-300000. Sodium carboxymethyl cellulose commonly used in the prior art generally has a weight-average molecular weight of more than 400000 (generally 500000 or more), and the inventors have found that if the weight-average molecular weight of sodium carboxymethyl cellulose is lowered, it is possible to obtain a slurry having a high solid component concentration that can remain stable for a long time during the preparation of a negative film, and to improve the processability of the negative electrode plate prepared.

In some embodiments, in the case of sodium carboxymethyl cellulose selected as the first binder, the first binder has a degree of substitution in the range of 0.65-0.8. Thus, it is possible to further improve the cohesion of the slurry, improve the adhesion strength of the negative film layer, reduce coating cracks, and improve the processability of the negative electrode plate.

In some embodiments, in the case of sodium carboxymethyl starch selected as the first binder, the polydispersibility index PDI thereof is controlled to be in the range of 2.0-5.5, and optionally of 2.5-4. Thus, it is possible to improve the water-retaining property of the slurry, so as to obtain a slurry having a high solid component concentration that can remain stable for a long time during the preparation of the negative film, and to improve the stability of the slurry and the processability of the negative electrode plate.

In some embodiments, in the case of sodium carboxymethyl starch selected as the first binder, the weight-average molecular weight (Mw) thereof is controlled to be 400000 or less, and optionally between 400000 and 600000. Thus, it is possible to reduce the coating cracks of the negative film layer.

In some embodiments, in the case of sodium carboxymethyl starch selected as the first binder, the first binder has a degree of substitution in the range of 0.7-0.9. Thus, it is possible to further improve the cohesion of the slurry, improve the adhesion strength of the negative film layer, reduce coating cracks, and improve the processability of the negative electrode plate.

In some embodiments, the second binder includes at least one of acrylate-ethylene, styrene butadiene rubber, nitrile rubber, acrylate, and polyurethane. Thus, it is possible to easily obtain a slurry for the negative film layer for properly controlling the thickness profile of the negative film layer as described above by means of simple extrusion coating during preparation, and to enble the slurry to remain stable for a long time.

In some embodiments, it is preferable if the second binder is styrene butadiene rubber from the viewpoints of giving full play to the synergistic effect of the first binder and the second binder, improving the adhesion of the slurry, reducing coating cracks, etc.

In some embodiments, it is preferable if the particle diameter Dv50 of the styrene butadiene rubber is in the range of 80 nm ≤ Dv50 ≤ 200 nm from the viewpoints of giving full play to the bonding effect, improving the cohesion of the slurry, and reducing the pressure required for extrusion coating.

In some embodiments, the first binder and the second binder have a content ratio ranging from 2 : 1 to 1 : 2, and optionally ranging from 1.5 : 1 to 1 : 1.5. Thus, it is possible to improve the water-retaining property of the slurry, to obtain a slurry having a high solid component concentration that can remain stable for a long time during the preparation of the negative film layer, and to improve the processability of the negative electrode plate prepared.

In some embodiments, the negative active material may be a negative active material for a secondary battery known in the art. As an example, the negative active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative active materials for batteries can also be used. These negative active materials may be used alone or in combination of two or more.

In some embodiments, the conductive agent may be selected from at least one of superconductive carbon, acetylene black, carbon black, Ketjen black, carbon dots, carbon nanotubes, graphene, and carbon nanofibers.

In some embodiments, the negative film layer 11 may optionally include other binders. Other binders may be selected from at least one of polyvinyl alcohol (PVA), sodium alginate (SA), carboxymethyl chitosan (CMCS), etc.

The negative current collector 12 in the negative electrode plate 1 may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

### [Method for preparing the negative electrode plate]

The method for preparing the negative electrode plate 1 in this embodiment will be described below.

The negative electrode plate 1 is formed by preparing a negative electrode material for the negative film layer into a negative slurry and coating one side or two sides of the negative current collector with the negative slurry.

The method for preparing a negative electrode plate according to an embodiment is shown in Fig. 6. First, a negative active material, a conductive agent, and a first binder are mixed to obtain a first mixture (step S1). The mixing process may be performed for 15-30 min by using a double-dispersion-disc double-planetary mixer with revolving, kneading and stirring functions under the conditions of a revolving speed of 25-100 rpm and a rotation speed of dispersion of 600-1,000 rpm.

Then, the second binder and deionized water are added to the first mixture, and kneading is performed for 60-120 min (step S2) by using a kneader (e.g., a double-dispersion-disc double-planetary mixer with revolving, kneading and stirring functions under the conditions of a revolving speed of 25-100 rpm and a rotation speed of dispersion of 0-200 rpm) to obtain a slurry for a negative film layer. The obtained slurry has a solid component content of 60% or more by mass, optionally 60%-75%, and the homogeneity of the slurry can be maintained at 25°C for more than 4 days in the air without moisture precipitation and solid agglomeration, without blocking an extrusion slit, and without settling, stratification, etc. With such a slurry, it is possible to easily obtain the negative film layer for properly controlling the thickness profile of the negative film layer of the embodiment described above by means of extrusion coating, thereby improving the yield of the negative electrode plate.

The slurry is applied to one or two sides of the negative current collector by means of extrusion coating (step S3). The extrusion coating may be performed through a slit with a width of 50-500 um by using, for example, a twin-screw extrusion coater at a pumping speed of 50-300 ml/min.

Thereafter, the negative current collector coated with the slurry for the negative film layer is placed in a drying oven adjusted at 120°C and dried for 2-120 min (step S4), so as to obtain the negative electrode plate of this embodiment.

The selection of the negative active material, the conductive agent, the first binder, and the second binder used in the method for preparing the negative electrode plate is as described in the above-mentioned embodiment of the negative electrode plate.

In addition, the secondary battery and the power consuming device of the present application will be described below with reference to the drawings as appropriate.

In an embodiment of the present application, a secondary battery is provided.

Typically, a secondary battery comprises a positive electrode plate, a negative electrode plate, an electrolyte and a separator. During a charge/discharge process of the battery, active ions are intercalated and de-intercalated back and forth between a positive electrode plate and a negative electrode plate. The electrolyte serves to conduct ions between the positive electrode plate and the negative electrode plate. The separator is provided between the positive electrode plate and the negative electrode plate, and mainly prevents the positive and negative electrodes from short-circuiting and enables ions to pass through.

In this embodiment, the negative electrode plate in the secondary battery uses the negative electrode plate described in the above-mentioned embodiment.

### [Positive electrode plate]

The positive electrode plate comprises a positive current collector and a positive film layer arranged on at least one surface of the positive current collector, the positive film layer comprising a positive active material.

In some embodiments, the positive current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive active material may be a positive active material known in the art for batteries. As an example, the positive active material may include at least one of the following materials: lithium-containing phosphates of an olivine structure, lithium transition metal oxides and their respective modified compounds. However, the present application is not limited to these materials, and other conventional materials that can be used as positive active materials for batteries may also be used. These positive active materials may be used alone or in combination of two or more. Herein, examples of lithium transition metal oxides may include, but are not limited to, at least one of lithium cobalt oxide (e.g. LiCoO₂), lithium nickel oxide (e.g. LiNiO₂), lithium manganese oxide (e.g. LiMnO₂, LiMn₂O₄), lithium nickel cobalt oxide, lithium manganese cobalt oxide, lithium nickel manganese oxide, lithium nickel cobalt manganese oxide (e.g. LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (e.g. LiNi_{0.85}Co_{0.15}Al_{0.05}O₂), and modified compounds thereof, and the like. Examples of lithium-containing phosphates of olivine structure may include, but are not limited to, at least one of lithium iron phosphate (e.g. LiFePO₄ (also referred to as LFP)), lithium iron phosphate and carbon composites, lithium manganese phosphate (e.g. LiMnPO₄), lithium manganese phosphate and carbon composites, lithium iron manganese phosphate, and lithium iron manganese phosphate and carbon composites.

In some embodiments, the positive film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-described components for preparing the positive electrode plate, such as a positive active material, a conductive agent, a binder and any other components, in a solvent (e.g., N-methylpyrrolidone) to form a positive slurry; and coating the positive current collector with the positive slurry, followed by the procedures such as drying and cold pressing, so as to obtain the positive electrode plate.

### [Electrolyte]

The electrolyte serves to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some implementations, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, the positive electrode plate, the negative electrode plate and the separator can be made into the electrode assembly by a winding process or a lamination process.

In some embodiments, the secondary battery may comprise an outer package. The outer package can be used to encapsulate the above-mentioned electrode assembly and electrolyte.

In some implementations, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, and polybutylene succinate, etc.

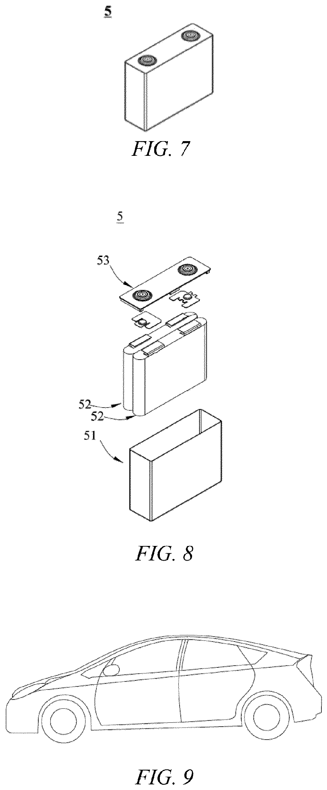

The shape of the secondary battery is not particularly limited in the present application, and may be cylindrical, square or of any other shape. For example, Fig. 7 illustrates the secondary battery 5 having a square structure as an example.

In some embodiments, referring to Fig. 8, the outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a laminating process to form an electrode assembly 52. The electrode assembly 52 is encapsulated in the accommodating cavity. The electrolyte is infiltrated into the electrode assembly 52. The number of the electrode assemblies 52 contained in the secondary battery 5 may be one or more, and can be selected by those skilled in the art according to actual requirements.

In addition, the present application further provides a power consuming device, including the secondary battery provided in the present application. The secondary battery may be used as a power supply of the power consuming device, or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As the power consuming device, the secondary battery may be selected according to its usage requirements, or assembled into a battery module or a battery pack for use.

Fig. 9 illustrates the power consuming device as an example. The power consuming device may be a pure electric vehicle, a hybrid electric vehicle, a plug-in hybrid electric vehicle or the like. In order to meet the demand for high power and high energy density of the secondary battery of the power consuming device, a battery pack or a battery module assembled by the secondary battery may be adopted.

As another example, the power consuming device may be a mobile phone, a tablet computer, a laptop computer, etc. The power consuming device is generally required to be thin and light, and may use the secondary battery as a power supply.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

### Examples 1-23 and comparative examples 1-4

The negative electrode slurries, the negative electrode plates, and the secondary batteries of examples 1-23 and comparative examples 1-4 are prepared by means of the following method.

### (1) Preparation of negative slurry

Artificial graphite as a negative active material, carbon black Super P as a conductive agent, a first binder and a second binder of the type shown in Table 1 were mixed according to the mass ratio of 96.5 : 0.5 : 1.5 : 1.5, and an appropriate amount of deionized water is added to adjust the mass percentage of solid component contents of the negative slurry to the values as shown in Table 1.

### (2) Preparation of negative electrode plate

The surface of a negative current collector copper foil is coated with the negative slurry obtained in above-mentioned step (1), and drying, cold pressing and cutting were performed to obtain a negative electrode plate, wherein the pumping speed of an extrusion coater was controlled to be different such that the average thickness d of a negative film layer after cold pressing became the thickness shown in Table 1.

**[Table 1]**

| Test sample no. | First binder | | | Second binder | | | Negative electrode Slurry | Negative electrode Film layer |
|---|---|---|---|---|---|---|---|---|
| | Type | Weight-average molecular weight | PDI | Type | Particle size (nm) | Weight-average molecular weight | Solid content (% by mass) | d (µm) |
| Example 1 | CMS-Na | 500000 | 2.0 | Styrene butadiene rubber | 120 | 800000 | 65 | 80 |
| Example 2 | CMS-Na | 500000 | 2.5 | Styrene butadiene rubber | 120 | 800000 | 65 | 80 |
| Example 3 | CMS-Na | 500000 | 4.0 | Styrene butadiene rubber | 120 | 800000 | 65 | 80 |
| Example 4 | CMS-Na | 500000 | 5.5 | Styrene butadiene rubber | 120 | 800000 | 65 | 80 |
| Example 5 | CMS-Na | 500000 | 4.0 | Styrene butadiene rubber | 120 | 800000 | 60 | 80 |
| Example 6 | CMS-Na | 500000 | 4.0 | Styrene butadiene rubber | 120 | 800000 | 63 | 80 |
| Example 7 | CMS-Na | 500000 | 4.0 | Styrene butadiene rubber | 120 | 800000 | 70 | 80 |
| Example 8 | CMS-Na | 500000 | 4.0 | Styrene butadiene rubber | 120 | 800000 | 75 | 180 |
| Example 9 | CMS-Na | 500000 | 3.0 | Styrene butadiene rubber | 120 | 800000 | 65 | 50 |
| Example 10 | CMS-Na | 500000 | 3.0 | Styrene butadiene rubber | 120 | 800000 | 65 | 80 |
| Example 11 | CMS-Na | 500000 | 3.0 | Styrene butadiene rubber | 120 | 800000 | 65 | 125 |
| Example 12 | CMS-Na | 500000 | 3.0 | Styrene butadiene rubber | 120 | 800000 | 65 | 180 |
| Example 13 | CMS-Na | 500000 | 3.0 | Styrene butadiene rubber | 120 | 800000 | 65 | 230 |
| Example 14 | CMS-Na | 500000 | 3.0 | Styrene butadiene rubber | 120 | 800000 | 65 | 300 |
| Example 15 | CMS-Na | 400000 | 3.0 | Styrene butadiene rubber | 120 | 800000 | 65 | 80 |
| Example 16 | CMS-Na | 600000 | 3.0 | Styrene butadiene rubber | 120 | 800000 | 65 | 80 |
| Example 17 | CMC-Na | 200000 | / | Styrene butadiene rubber | 80 | 800000 | 63 | 100 |
| Example 18 | CMC-Na | 250000 | / | Styrene butadiene rubber | 80 | 800000 | 63 | 100 |
| Example 19 | CMC-Na | 300000 | / | Styrene butadiene rubber | 80 | 800000 | 63 | 100 |
| Example 20 | CMC-Na | 400000 | / | Styrene butadiene rubber | 80 | 800000 | 63 | 100 |
| Example 21 | CMC-Na | 200000 | / | Styrene butadiene rubber | 200 | 800000 | 63 | 100 |
| Example 22 | CMS-Na | 400000 | 4.0 | Ethylene propylene rubber | 150 | 600000 | 65 | 180 |
| Example 23 | CMS-Na | 400000 | 4.0 | Acrylate latex | 180 | 1200000 | 65 | 180 |
| Comparative example 1 | CMS-Na | 500000 | 3 | Styrene butadiene rubber | 120 | 800000 | 52 | 80 |
| Comparative example 2 | CMS-Na | 500000 | 3 | Styrene butadiene rubber | 120 | 800000 | 65 | 320 |
| Comparative example 3 | CMS-Na | 400000 | 3 | Styrene butadiene rubber | 120 | 800000 | 60 | 125 |
| Comparative example 4 | CMC-Na | 500000 | / | Styrene butadiene rubber | 120 | 800000 | 52 | 80 |

### (3) Preparation of secondary battery

The following positive electrode plate, separator and electrolyte are prepared respectively.

### Positive electrode plate

An LFP as a positive active material, carbon black Super P as a conductive agent, and PVDF as a binder were fully stirred and mixed in an appropriate amount of NMP according to the mass ratio of 96 : 2 : 2 so as to form a uniform positive slurry; the surface of the positive current collector aluminum foil was coated with the positive slurry under the condition of ensuring that the active material capacity ratio CB of a negative electrode plate to the positive electrode tab is 1.1. The positive electrode plate is obtained by means of drying and cold pressing, wherein the positive electrode plate has a compacted density of 2.4 g/cm³.

### Separator

A PP/PE composite separator is used.

### Electrolyte

Ethylene carbonate (EC), ethyl methyl carbonate (EMC) and diethyl carbonate (DEC) are mixed according to the volume ratio of 1 : 1 : 1, LiPF₆ is then uniformly dissolved in the above solution, and the concentration of the LiPF₆ is adjusted to 1 mol/L, thereby obtaining an electrolyte.

The positive electrode plate, the separator and the negative electrode plate are stacked and wound in sequence to obtain an electrode assembly. The electrode assembly is placed into an outer package, the electrolyte prepared above is added, and a secondary battery is obtained after the procedures of packaging, standing, formation, aging, etc.

### Test method

### (a) Performance test related to negative slurry:

### 1. Test on stable storage time of slurry

The slurry prepared in above-mentioned step (1) was taken for standing at room temperature, the slurry is charged from a tail using a 1 ml syringe (having a needle diameter of 330 µm), the slurry is extruded from a needle tip, and the test is carried out at regular time every day, wherein the number of days for which the slurry appears to block a needle hole at the time of extrusion such that 1 ml of the slurry can not be completely extruded out, is taken as the stable storage time of the slurry and recorded in Table 2.

### 2. Extrusion pressure for slurry through slit having width of 100 µm

The slurry prepared in above-mentioned step (1) is extruded through a slit having a width of 100 µm by using an extrusion coater with a pressure sensor attached thereto, and the flow rate is controlled to be 100 ml/min, and a pressure value measured by the pressure sensor i read and recorded in the Table 2 below.

### (b) Performance test related to negative electrode plate:

### 1. Edge bulge of negative electrode plate during winding

During the preparation of the negative electrode plate of above-mentioned step (2), the electrode plate, which had been coated with a single layer and before drying and compaction, is tightly wound using a roll having a diameter of 10 cm with a width direction of the electrode plate as an axial direction to obtain 100 m of an electrode plate. a perimeter l₁ at the axial center of the roll and a perimeter l₂ at a position at a distance of 1 mm from at an edge of the negative film layer are measured, an edge bulge value is calculated according to an edge bulge degree y = (l₂-l₁)/l₁, the edge bulge degree is determined according to the following criteria, and the results are shown in Table 2 below.

### Evaluation criteria:

No edge bulge: y ≤ 0.5%;
Slight edge bulge: 0.5 < y ≤ 1%;
Severe edge bulge: y > 1%.

### 2. Coating cracking of negative film layer

During the preparation of the negative electrode plate of above-mentioned step (2), after the slurry is applied to the negative current collector and dried in a drying channel at 120°C, 4 sections of 2 m dried electrode plates are taken, the appearances of the electrode plates are observed, the degree of surface cracking is determined according to the following criteria, and the results are shown in Table 2 below.

### Evaluation criteria:

No cracking: No visible cracks;
Slight cracking: Visible cracks, the length of all cracks ≤ 2 cm, and the average number of cracks in 2 m of electrode plates ≤ 10;
Severe cracking: the length of cracks > 2 cm or the average number of cracks in 2 m of electrode plates > 10.

### 3. Shape of cross section of negative film layer

A sample including a complete cross section perpendicular to the length direction of the current collector is cut out from the dried cold-pressed negative electrode plate obtained in above-mentioned step (2), the complete cross section perpendicular to the length direction of the current collector is subjected to metallographic grinding or plasma polishing, and after the back surface thereof is fixed to a sample table with polyester resin, it is observed with an optical microscope (such as CCD) or an electron microscope and the width a of the negative film layer in the negative electrode plate is measured, and the aid value is calculated and shown in Table 2. d represents the average thickness of a uniform thickness region, which refers to a region where no significant change in thickness occurs in a middle portion in the width direction of the negative film layer under observation with the optical microscope (such as CCD) or the electron microscope. The expression "no significant change in thickness" is defined as: the thickness values d₁, d₂... d₁₀ are randomly measured 10 times within any 100 µm width of the negative film layer, and a variable coefficient of the thickness thereof (CV_{d} ≤ 5%) is considered as a uniform thickness variation within the 100 µm width. a represents the length of projections of the edge regions located at two ends in the width direction, and the edge regions refer to regions from s position where the negative film layer starts to appear on the current collector to a position where the continuously decreasing tendency of the thickness of the negative film layer starts to appear at an end edge of the uniform thickness region under observation with the optical microscope (such as CCD) or the electron microscope.

### 4. Edge lithium precipitation after charging and discharging of negative electrode plate

At 25°C, 10 secondary batteries are prepared for each example and each comparative example and fully charged at 1 C respectively, and full charge at 1 C and discharge are repeated for 10 times, the lithium ion secondary batteries are then fully charged at 3 C, the negative electrode plates are later removed, the edge lithium precipitation of the negative electrode plates in each battery is observed, the number of secondary batteries in which the edge lithium precipitation occurs is counted, and the number/10 of secondary batteries in which the edge lithium precipitation occurs is regarded as the probability of the edge lithium precipitation, which is shown in Table 2.

**[Table 2]**

| Test sample no. | Cross section of negative film layer | | Sluny performance | | Processability of electrode plate | | Secondary battery |
|---|---|---|---|---|---|---|---|
| | a | aid | Stabilization time | Extrusion pressure at the slit having a width of 100 µm | Edge bulge during winding | Coating cracking | Probability of edge lithium precipitation after charging at 3C |
| | (µm) | | (days) | (Mpa) | | | |
| Example 1 | 20 | 0.25 | 4 | 0.28 | No edge bulge | No cracking | 0/10 |
| Example 2 | 35 | 0.44 | 6 | 0.32 | No edge bulge | No cracking | 0/10 |
| Example 3 | 55 | 0.69 | 7 | 0.56 | No edge bulge | No cracking | 0/10 |
| Example 4 | 65 | 0.81 | 10 | 0.75 | No edge bulge | No cracking | 1/10 |
| Example 5 | 120 | 1.5 | 4 | 0.24 | No edge bulge | No cracking | 1/10 |
| Example 6 | 70 | 0.88 | 6 | 0.35 | No edge bulge | No cracking | 1/10 |
| Example 7 | 20 | 0.25 | 9 | 0.94 | No edge bulge | No cracking | 0/10 |
| Example 8 | 5 | 0.03 | 6 | 1.76 | No edge bulge | No cracking | 0/10 |
| Example 9 | 10 | 0.2 | 6 | 0.4 | No edge bulge | No cracking | 0/10 |
| Example 10 | 40 | 0.5 | 6 | 0.4 | No edge bulge | No cracking | 0/10 |
| Example 11 | 80 | 0.64 | 6 | 0.4 | No edge bulge | No cracking | 0/10 |
| Example 12 | 145 | 0.81 | 6 | 0.4 | No edge bulge | No cracking | 1/10 |
| Example 13 | 210 | 0.91 | 6 | 0.4 | No edge bulge | No cracking | 1/10 |
| Example 14 | 295 | 0.98 | 6 | 0.4 | Slight edge bulge | Slight cracking | 2/10 |
| Example 15 | 65 | 0.81 | 4 | 0.23 | No edge bulge | No cracking | 1/10 |
| Example 16 | 25 | 0.31 | 8 | 0.87 | No edge bulge | Slight cracking | 0/10 |
| Example 17 | 130 | 1.3 | 4 | 0.41 | No edge bulge | No cracking | 1/10 |
| Example 18 | 95 | 0.95 | 4 | 0.56 | No edge bulge | No cracking | 1/10 |
| Example 19 | 65 | 0.65 | 5 | 0.69 | No edge bulge | No cracking | 0/10 |
| Example 20 | 40 | 0.4 | 6 | 0.93 | No edge bulge | Slight cracking | 0/10 |
| Example 21 | 110 | 1.1 | 6 | 0.27 | No edge bulge | No cracking | 1/10 |
| Example 22 | 160 | 0.89 | 6 | 0.38 | No edge bulge | No cracking | 1/10 |
| Example 23 | 135 | 0.75 | 5 | 0.63 | No edge bulge | No cracking | 0/10 |
| Comparative example 1 | 240 | 3 | 2 | 0.05 | Severe edge bulge | No cracking | 10/10 |
| Comparative example 2 | 330 | 1.03 | 6 | 0.4 | Slight edge bulge | Severe cracking | 5/10 |
| Comparative example 3 | 210 | 1.68 | 4 | 0.12 | Slight edge bulge | No cracking | 4/10 |
| Comparative example 4 | 260 | 3.25 | 2 | 0.08 | Severe edge bulge | Slight cracking | 10/10 |

It can be seen from examples 1-23 and comparative examples 1, 3 and 4 that the aid of the negative film layer is closely related to the lithium precipitation at the negative electrodes of the secondary batteries after charging and discharging, and where the thickness of the prepared negative film layer is controlled to be d ≤ 300 µm and aid ≤ 1.5, the probability of edge lithium precipitation of the secondary batteries is greatly reduced, and accordingly the safety of the secondary batteries can be improved. It can be further seen that when aid ≤ 1, the probability of edge lithium precipitation of the secondary batteries can be further reduced to be 1/10 or less, and when aid ≤ 0.75, the edge lithium precipitation of the secondary batteries is not even found.

It can be seen by comparing the results of examples 9-14 and comparative example 2 with the same experimental parameters except the difference in thickness, that when d ≤ 300 um is controlled, the phenomena of edge bulge and coating cracking of the negative electrode plate can be significantly improved, the processability of the plate can be improved, the occurrence of lithium precipitation in the negative electrode of the secondary battery after charging and discharging can also be significantly reduced, and the safety of the secondary battery can thus be improved.

It can be seen by comparing the results of examples 4-8 that, by adjusting the solid component content of the slurry in the range of 60%-75%, a negative electrode plate having a smaller aid can be obtained, and in particular when the solid component content is adjusted in the range of 60-70%, a lip pressure for extrusion coating can be further reduced, and extrusion processing is easier, such that device wear can be reduced during preparation.

It can be seen by comparing the results of examples 1-4 and example 10 that, when sodium carboxymethyl starch (CMS-Na) is used as the first binder, a highly stable slurry can be obtained and the lip pressure for extrusion coating can be reduced to be 0.75 Mpa or less by using sodium carboxymethyl starch (2.0 ≤ PDI ≤ 5.5), namely, a slurry facilitating extrusion processing can be obtained, such that the device wear can be reduced during preparation.

It can further be seen by comparing the results of examples 10, 15 and 16, which also use sodium carboxymethyl starch (CMS-Na) as the first binder, that both the stability and ease of extrusion of the slurry and the processability and safety of the prepared negative electrode plate can be achieved when the weight-average molecular weight of sodium carboxymethyl starch is in the range of 400000-600000.

The results of examples 17-20 show that negative electrode plate of the present invention can also be prepared using other water-retentive materials such as sodium carboxymethyl cellulose (CMC-Na) as the first binder, wherein the stability and ease of extrusion of the slurry and the processability and safety of the prepared negative electrode plate can both be achieved when the weight-average molecular weight of sodium carboxymethyl cellulose is 400000 or less, especially in the range of 200000-300000.

In addition, the comparison of the results of examples 1-20 and examples 21-23 shows that the negative electrode plate of the present invention can also be prepared by using other types of second binders.

Moreover, the capacity retention rates of the secondary batteries prepared with the negative electrode plates obtained in examples 10, 11, 14, 17, and 21 and comparative examples 1-3 are further investigated. The capacity retention rates of the secondary batteries of these examples after 500 cycles at 45°C are measured according to the following method.

At 45°C, the secondary battery is charged at a constant current rate of 1 C to a charge cutoff voltage of 3.65 V, then charged at a constant voltage until a current is ≤ 0.05 C, stands for 10 min, then is discharged at a constant current rate of 0.5 C to a discharge cutoff voltage of 2.5 V, and stands for 10 min. This process is regarded as a first charge-discharge cycle, and the discharge capacity is recorded as C₀. A 500 cls charge-discharge cycle test is conducted on the battery according to this method, the 500^{th} discharge capacity is recorded as C₁. C₁/C₀ is calculated as a 500 cls capacity retention rate at 45°C, and results are shown in Table 3 below.

**[Table 3]**

| Test sample no. | Cross section of negative film layer | | | Processability of electrode plate | | Secondary battery | |
|---|---|---|---|---|---|---|---|
| | a (µm) | d (µm) | aid | Edge bulge during winding | Coating cracking | Probability of edge lithium precipitation after charging at 3C | At 45°C, 500 cls capacity retention rate/% |
| Example 10 | 40 | 80 | 0.5 | No edge bulge | No cracking | 0/10 | 91.4 |
| Example 11 | 80 | 125 | 0.64 | No edge bulge | No cracking | 0/10 | 91.2 |
| Example 14 | 295 | 300 | 0.98 | Slight edge bulge | Slight cracking | 2/10 | 90.1 |
| Example 17 | 130 | 100 | 1.3 | No edge bulge | No cracking | 1/10 | 90.4 |
| Example 21 | 110 | 100 | 1.1 | No edge bulge | No cracking | 1/10 | 89.9 |
| Comparativ e example 1 | 240 | 80 | 3 | Severe edge bulge | No cracking | 10/10 | 88.3 |
| Comparativ e example 2 | 330 | 320 | 1.03 | Slight edge bulge | Severe cracking | 5/10 | 88.7 |
| Comparativ e example 3 | 210 | 125 | 1.68 | Slight edge bulge | No cracking | 4/10 | 88.4 |

As can be seen from the results in Table 3, when the aid value of the negative film layer is greater than 1.5, the capacity retention rate is also lowered. Furthermore, it can be seen from the result of comparative example 2 that, when the negative film layer is too thick, the cycling capacity retention rate of the secondary battery may also be further reduced due to the low kinetic property of the thicker electrode plate.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A negative electrode plate, comprising a negative current collector and a negative film layer located on a surface of the negative current collector, wherein
the negative film layer has a length direction consistent with a length direction of the negative current collector and a width direction consistent with a width direction of the negative current collector,
a cross section of the negative film layer perpendicular to the length direction comprises a uniform thickness region located at a middle portion in the width direction and edge regions located at two ends in the width direction,
either of the edge regions has a thickness continuously decreasing in a direction from the uniform thickness region to the edge region, and
the width a of either of the edge regions and the average thickness d of the uniform thickness region satisfy the relational expression: aid ≤ 1.5,
and d ≤ 300 µm.

2. The negative electrode plate of claim 1, wherein aid ≤ 1; and optionally aid ≤ 0.75.

3. The negative electrode plate of claim 1 or 2, wherein the negative film layer comprises a negative active material, a conductive agent, a first binder, and a second binder;
optionally, the first binder comprises at least one of (methyl) acrylic acid, polyacrylamide, cellulose ether or salt thereof, starch ether or salt thereof; and
optionally, the second binder comprises at least one of acrylate-ethylene, styrene butadiene rubber, nitrile rubber, acrylate, and polyurethane.

4. The negative electrode plate of claim 3, wherein the first binder comprises sodium carboxymethyl cellulose, the sodium carboxymethyl cellulose having a weight-average molecular weight of 400000 or less, and optionally in the range of 200000-300000.

5. The negative electrode plate of claim 3 or 4, wherein the first binder comprises sodium carboxymethyl cellulose, the sodium carboxymethyl cellulose having a degree of substitution in the range of 0.65-0.8.

6. The negative electrode plate of any one of claims 3-5, wherein the first binder comprises sodium carboxymethyl starch, the sodium carboxymethyl starch having a polydispersity index (PDI) in the range of 2.0-5.5, and optionally 2.5-4.

7. The negative electrode plate of any one of claims 3-6, wherein the first binder comprises sodium carboxymethyl starch, the sodium carboxymethyl starch having a weight-average molecular weight of 400000 or more, and optionally in the range of 400000-600000.

8. The negative electrode plate of any one of claims 3-7, wherein the second binder is styrene butadiene rubber having a volume average particle size Dv50 satisfying: 80 nm ≤ Dv50 ≤ 200 nm.

9. The negative electrode plate of any one of claims 3-8, wherein the first binder and the second binder have a mass content ratio ranging from 2 : 1 to 1 : 2, and optionally from 1.5 : 1 to 1 : 1.5.

10. A method for preparing a negative electrode plate, comprising the following steps:
coating a negative current collector with a negative slurry, and obtaining the negative electrode plate by means of drying and cold pressing of the negative slurry, the negative electrode plate being the negative electrode plate of claim 1 or 2.

11. The method for preparing a negative electrode plate of claim 10, wherein the negative slurry has a solid component content of greater than or equal to 60% by mass, and optionally in the range of 60%-75% by mass.

12. The method for preparing a negative electrode plate of claim 10 or 11, wherein
the negative slurry comprises a negative active material, a conductive agent, a first binder, and a second binder, and
the preparation method comprises: mixing the negative active material, the conductive agent, the first binder, the second binder and deionized water to obtain the slurry; and coating the slurry on the surface of the current collector by extrusion, and obtaining the negative electrode plate by means of drying and cold pressing of the negative slurry,
optionally, the first binder is at least one of (methyl) acrylic acid, polyacrylamide, cellulose ether or salt thereof, starch ether or salt thereof; and
optionally, the second binder is at least one of acrylate-ethylene, styrene butadiene rubber, nitrile rubber, acrylate, and polyurethane.

13. The method for preparing a negative electrode plate of claim 12, wherein the first binder comprises sodium carboxymethyl cellulose, the sodium carboxymethyl cellulose having a weight-average molecular weight of 400000 or less, and optionally in the range of 200000-300000.

14. The method for preparing a negative electrode plate of claim 12 or 13, wherein the first binder comprises sodium carboxymethyl cellulose, the sodium carboxymethyl cellulose having a degree of substitution in the range of 0.65-0.8.

15. The method for preparing a negative electrode plate of any one of claims 12-14, wherein the first binder comprises sodium carboxymethyl starch, the sodium carboxymethyl starch having a polydispersity index (PDI) in the range of 2.0-5.5, and optionally 2.5-4.

16. The method for preparing a negative electrode plate of any one of claims 12-15, wherein the first binder comprises sodium carboxymethyl starch, the sodium carboxymethyl starch having a weight-average molecular weight of 400000 or more, and optionally in the range of 400000-600000.

17. The method for preparing a negative electrode plate of any one of claim 12-16, wherein the second binder is styrene butadiene rubber having a volume average particle size Dv50 satisfying: 80 nm ≤ Dv50 ≤ 200 nm.

18. The method for preparing a negative electrode plate of any one of claims 12-17, wherein the first binder and the second binder have a mass content ratio ranging from 2 : 1 to 1 : 2, and optionally from 1.5 : 1 to 1 : 1.5.

19. A secondary battery, comprising a negative electrode plate of any one of claims 1-9 or a negative electrode plate manufactured by the method for preparing a negative electrode plate of any one of claims 10-18.

20. A power consuming device, comprising a secondary battery of claim 19.
